# DEMANDE DE BREVET EUROPEEN

(11) **EP 0 755 153 A1**
(43) Date de publication de la demande: **22.01.1997**
(21) Numéro de dépôt: 96460026.6
(22) Date de dépôt: 17.07.1996
(51) Int. Cl.: H04N 5/46, H04N 7/24

(54) **Procédé et module de contrôle et gestion de la réception de signaux numériques à commandes indépendantes du canal de transmission**

(30) Priorité: 17.07.1995 FR 9508839
(71) Demandeur: COMATLAS S.A., 35222 Chateaubourg (FR)
(72) Inventeur: Dubreuil, Alain, 35410 Nouvoitou (FR)
(74) Mandataire: Vidon, Patrice

(57) **Abrégé**

L'invention concerne un procédé de contrôle et de gestion de la réception de signaux numériques susceptibles d'être transmis selon plusieurs modes de transmission, correspondant chacun à un canal de transmission distinct.

Selon l'invention, on associe à chacun desdits modes de transmission un module de contrôle spécifique capable de :
- recevoir des commandes génériques (28) indépendantes desdits modes de transmission ; et
- générer des commandes spécifiques au mode de transmission concerné, à destination de moyens spécifiques de réception comprenant notamment un syntoniseur (221), un démodulateur numérique (222) et un décodeur de canal (224), en fonction desdites commandes génériques (28).

## Description

Le domaine de l'invention est celui de la réception de signaux numériques, et notamment, mais non exclusivement, de signaux d'images numériques. Plus, précisément, l'invention concerne le traitement de ces signaux dans un récepteur, de façon à restituer un signal source, quel que soit le support de transmission.

On sait en effet que les signaux, et notamment les signaux de télévision, peuvent être transmis de très nombreuses façons, telles que la diffusion par satellite ou terrestre, la distribution par câble, par voie téléphonique numérique (RNIS), par voie ATM, etc... Bien-sûr, à chaque support correspond une structure d'émission, ou canal de transmission, (fréquences, modulations, codages de canal...) différente. En conséquence, chaque récepteur doit être adapté au support de transmission, et est contrôlé et réglé de façon spécifique à ce support.

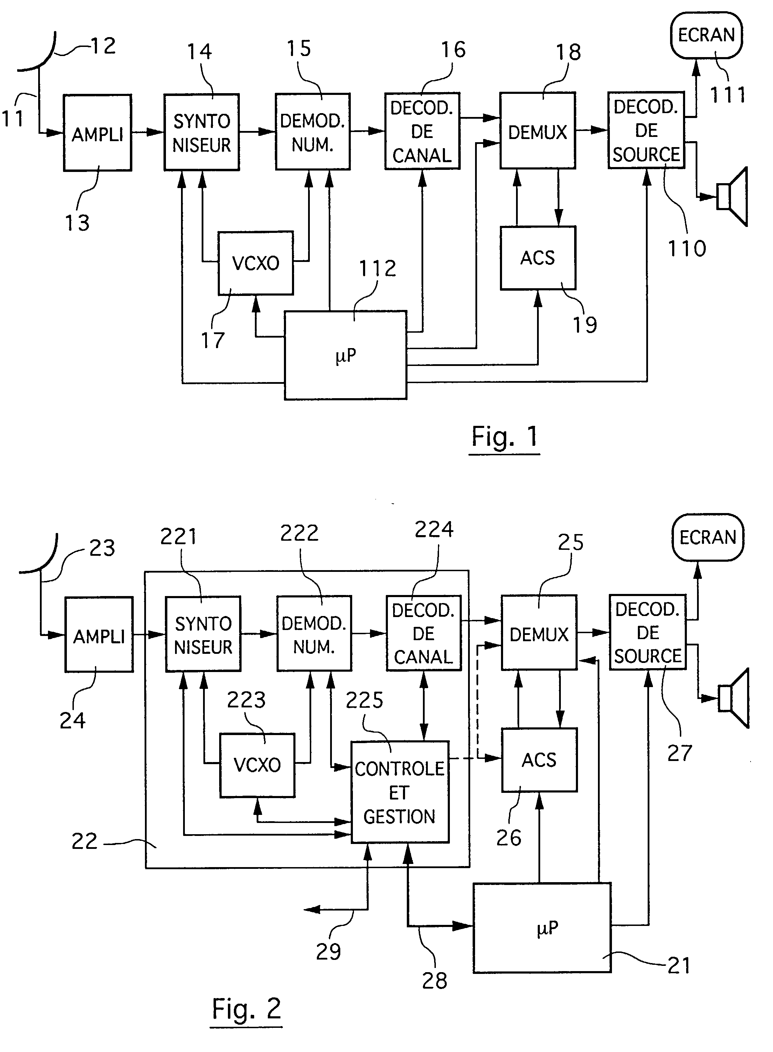

La figure 1 illustre de façon générale un tel récepteur connu. Le signal reçu 11, par exemple par une antenne satellite 12, est amplifié par un amplificateur à faible bruit (LNB) 13, puis est traité successivement par un syntoniseur 14, un démodulateur numérique 15 et un décodeur de canal 16. Un oscillateur contrôlé en fréquence 17 pilote le syntoniseur et le démodulateur. Ensuite, le signal décodé alimente un démultiplexeur 18, contrôlé par un module de synchronisation (ACS) 19, qui alimente lui-même un décodeur source 110 restituant un signal source sur un écran 111.

Ces différents constituants d'une chaîne de réception sont bien connus, et il n'est donc pas nécessaire de les présenter en détail.

Classiquement, un microprocesseur 112 contrôle et commande tous les éléments de la chaîne. Il doit donc assurer des fonctions très diverses, indépendantes et non synchronisés, parfois très rapidement. Cela nécessite donc un microprocesseur très puissant, voire plusieurs microprocesseurs se répartissant la tâche.

Outre ce problème majeur du nombre de composants à contrôler se pose l'inconvénient de la spécificité des commandes et des informations générées ou échangées par le microprocesseur. Elles sont très techniques, et nécessitent que le programmeur connaisse parfaitement le fonctionnement de tous les éléments (du syntoniseur au décodeur source).

Par ailleurs, et de façon plus cruciale encore, le programmeur doit s'adapter à chaque type de support de transmission. Il apparaît clairement que les fonctionnements du démodulateur numérique ou du décodeur source sont complètement différents selon que le signal est reçu via satellite ou sur une ligne téléphonique.

Outre la complexité de la programmation, et par conséquence du fonctionnement du microprocesseur, ce problème se traduit bien évidemment par des récepteurs spécifiques à chaque support de transmission (ou à des duplications totales des chaînes de réception dans le récepteur).

L'invention a notamment pour objectif de pallier ces différents inconvénients de l'état de la technique.

Plus précisément, un objectif de l'invention est de fournir un procédé de réception permettant de s'affranchir, vu du programmeur, et donc du microprocesseur central, du support de transmission. En d'autres termes, l'invention a notamment pour objectif de fournir un tel procédé qui soit universel, en ce qui concerne la réception et la démodulation, vues de l'utilisateur.

Un autre objectif de l'invention est de fournir un tel procédé, qui facilite la programmation du microprocesseur central et limite les traitements effectués par celui-ci.

Encore un autre objectif de l'invention est de fournir un tel procédé, permettant de changer aisément, sans aucun réglage, de support de transmission. En d'autres termes, l'invention a pour objectif de fournir un procédé rendant transparent pour le microprocesseur central les aspects techniques relatifs au canal de transmission.

L'invention a également pour objectif de fournir un tel procédé simplifiant et optimisant le contrôle des différents composants techniques du récepteur.

Ces objectifs, ainsi que d'autres qui apparaîtront par la suite, sont atteints selon l'invention par un procédé de contrôle et de gestion de la réception de signaux numériques susceptibles d'être transmis selon plusieurs modes de transmission, correspondant chacun à un canal de transmission distinct,
caractérisé en ce qu'on associe à chacun desdits modes de transmission un module de contrôle spécifique capable de :
- recevoir des commandes génériques indépendantes desdits modes de transmission ; et
- générer des commandes spécifiques au mode de transmission concerné, à destination de moyens spécifiques de réception comprenant notamment un syntoniseur, un démodulateur numérique et un décodeur de canal, en fonction desdites commandes génériques.

Avantageusement, ledit module de contrôle spécifique reçoit et/ou relève des informations spécifiques auxdits moyens de réception, et délivre des informations génériques correspondantes.

De façon avantageuse, ledit module de contrôle spécifique positionne, dans des situations prédéfinies, des indicateurs destinés à un organe central de gestion.

Préférentiellement, lesdits indicateurs sont interprétés par ledit organe central de gestion comme des interruptions.

De façon préférentielle, ledit module de contrôle spécifique mémorise :
- des données de transcription et d'interprétation desdites commandes génériques et/ou desdites informations génériques ;
- des données de réglage desdits moyens spécifiques de réception, en fonction de paramètres génériques ;
- des données sur le déroulement de la réception et les éventuels incidents.

Avantageusement, ledit procédé assure au moins une des fonctions appartenant au groupe comprenant :
- supervision de la réception, avec notamment détection et mémorisation des incidents et diagnostic ;
- acquisition des données, avec notamment recherche et identification des porteuses, détermination et mémorisation des paramètres de transmission, resynchronisation, optimisation des paramètres de transmission ;
- poursuite, avec notamment optimisation des paramètres en fonction d'un historique, minimisation des incidents, apprentissage du canal de transmission ; et
- service avec notamment présentation d'informations générales.

Préférentiellement, lesdites commandes génériques et/ou lesdites informations génériques sont présentées sous la forme d'octets délivrés de façon séquentielle.

De façon avantageuse, lesdites commandes spécifiques s'appliquent également à des moyens de démultiplexage et/ou à des moyens de synchronisation.

L'invention concerne également un module de contrôle et de gestion de la réception de signaux numériques destinés à être reçus selon un mode de transmission donné, choisi parmi une pluralité de modes de transmission,
caractérisé en ce qu'il comprend :
- des moyens pour recevoir des commandes génériques délivrées par un organe central de gestion ;
- des premiers moyens de mémorisation, non accessibles, comprenant des données d'interprétation ;
- des moyens d'interprétation desdites commandes génériques, en fonction desdites données d'interprétation et de paramètres de commande délivrant des commandes spécifiques audit mode de transmission donné, à destination de moyens spécifiques de réception comprenant notamment un syntoniseur, un démodulateur numérique et un décodeur de canal,
- des seconds moyens de mémorisation desdits paramètres de commandes, lesdits paramètres de commande étant déterminés par ledit module et/ou reçus de l'extérieur.

Avantageusement, ledit module comprend des troisièmes moyens de mémorisation de données représentatives du déroulent de la réception, et des moyens d'optimisation des paramètres de réception en fonction desdites données représentatives du déroulement de la réception.

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :
- la figure 1 est un schéma synoptique simplifié d'un récepteur de type connu déjà discuté en préambule ;
- le figure 2 est un schéma synoptique simplifié d'un récepteur selon l'invention ;
- la figure 3 est un exemple de réalisation du module de contrôle et de gestion du récepteur de la figure 2 ;
- la figure 4 illustre, de façon simplifiée, un ensemble de fonctions assurées par le module de contrôle et de gestion de la figure 3.

Comme expliqué précédemment, l'invention permet de rendre le fonctionnement d'un récepteur indépendant du canal de transmission, vu d'un organe de gestion 21, comprenant classiquement un ou plusieurs microprocesseurs.

Pour cela, l'invention prévoit un ensemble matériel 22 interchangeable, comprenant les éléments de réception spécifiques à chaque canal de transmission, tels que notamment :
- un syntoniseur 221 ;
- un démodulateur numérique 222 ;
- un oscillateur contrôlé en tension (VCXO 223), pilotant le syntoniseur 221 et le démodulateur 222. Le VCXO peut être un dispositif numérique tel qu'un synthétiseur numérique (pas de tension de commande dans ce cas, mais une information numérique de commande). Le VCXO peut même être un XO tout simplement ;
- un décodeur de canal 224.

Ces éléments sont classiques. Ils reçoivent un signal reçu (23) et amplifié (24) et alimente un démultiplexeur 25, contrôlé par un séquenceur 26 et alimentant lui-même un décodeur source 27, par exemple à la norme JPEG ou MPEG.

Selon l'invention, l'ensemble matériel 22 comprend un module 225 de contrôle et de gestion, qui est capable de piloter tous les éléments 221 à 224, en leur délivrant les commandes spécifiques qu'il attendent. Ce module 225 communique par ailleurs avec l'organe central 21, à l'aide d'instructions génériques 28.

En d'autres termes, l'invention propose une série d'instructions génériques, qui permet à l'organe central 21 de fonctionner indépendamment des caractéristiques du canal de transmission.

L'adaptation au canal de transmission est assuré par l'interchangeabilité de l'ensemble matériel 22. En d'autres termes, la transcription de gestion, de façon transparente pour l'organe central 21, et donc pour le programmeur.

On peut donc, par exemple, prévoir des ensembles 22 pour les canaux de transmission suivants :
- transmission satellitaire (telle qu'illustrée) ;
- transmission par câble ;
- transmission sur ligne RNIS ;
- transmission sur ligne ADSL;
- transmission par ATM (mode de transmission asynchrone) ;
- transmission par SDH ;
- transmission par voie terrestre ;
- ...

Par ailleurs, cette technique nouvelle permet de réduire les traitements effectués par l'organe central 21, une information générique 28 pouvant correspondre, comme on le verra par la suite, à une instruction de haut niveau (donc aisée à programmer) correspondant à plusieurs commandes ou actions à l'intérieur de l'ensemble 22 (appelé par la suite module "INFER").

Le rôle du module 225 de contrôle et gestion ne se limite pas à la transcription d'ordres reçus de l'organe central 21. Il assure également, notamment, des fonctions internes de contrôle, telles que l'optimisation de paramètres. Par ailleurs, il délivre également à l'organe central 21 des informations génériques 28, en fonction des données relevées sur les éléments 221 à 224 et/ou stockées en mémoire. Il peut encore délivrer des données pour redirection 29, vers un modem téléphonique par exemple.

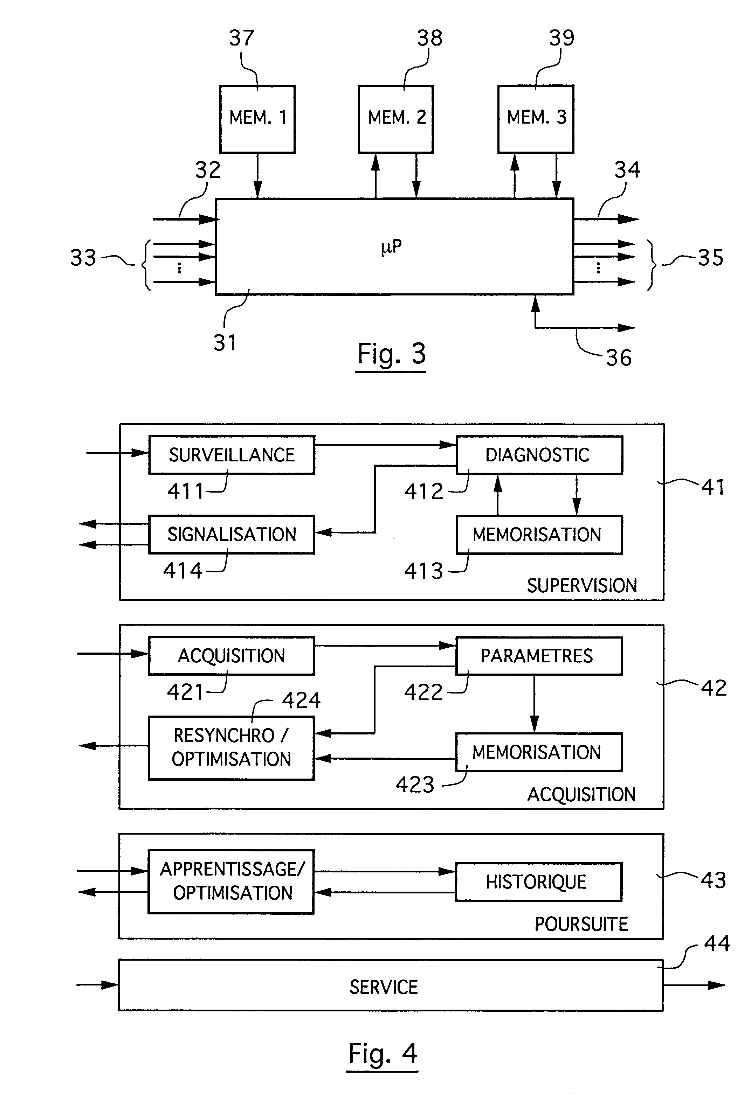

La figure 3 illustre un exemple de réalisation du module 225 de contrôle et de gestion.

Il comprend un microprocesseur 31, qui reçoit :
- des commandes génériques 32, délivrées par l'organe central 21 ;
- un ensemble de signaux de contrôle ou de mesure 33 délivrés par les éléments de l'ensemble 22.

Il produit, en fonction de ces données :
- des informations génériques 34 destinées à l'organe central 21 ;
- des commandes spécifiques 35 destinées aux différents éléments 221 à 224;
- des informations de redirection 36.

Il assure la transcription des commandes génériques 32 en commandes spécifiques 34 en fonction de données de transcription stockées dans une mémoire morte 37. Il tient compte également de paramètres de réception (fréquences, types de codage...) stockés dans une seconde mémoire 38. Cette mémoire 38 est mise à jour automatiquement par le microprocesseur 31, en fonction de données 33.

Par exemple, l'organe central peut délivrer une information telle que "recherche rapide (canal 5)". Le traitement effectué est alors tel que décrit ci-dessous.

L'organe central commence par lire une table (mémoire) qu'il tient a jour, pour voir s'il y trouve "canal 5".

Si oui, le contenu de cette table lui donne la valeur de polarisation, le satellite, les informations sur le type de codage du canal et les paramètres correspondants (rendement du code par exemple) et la fréquence à partir de laquelle il doit démarrer la procédure d'acquisition rapide. Ces valeurs sont chargées dans le démodulateur, le syntoniseur, le décodeur de canal. La procédure d'acquisition rapide commence alors, en faisant varier la fréquence du syntoniseur à partir de la valeur donnée par la table vers les valeurs supérieures, par exemple jusqu'à ce que un pic d'énergie suffisante verrouille le processus : il ne peut s'agir alors que du "canal 5" cherché. Des informations d'états sont alors renvoyées vers le bus de contrôle, et la mémoire est mise à jour avec les valeurs courantes (prise en compte des dérives dans le temps).

Si non, l'organe central renvoie les informations suivantes : le "canal 5" est inconnu. Faut-il le rechercher ? Où ? Sur quel satellite ? Quelle fréquence ? Quelle polarisation ?... Il s'agit d'une procédure interactive qui vise à donner à l'organe central la confirmation de l'ordre de recherche, et les informations disponibles : elles peuvent être partielles, et dans ce cas, une recherche plus ou moins systématique s'engage, en fonction de paramètres connus et inconnus.

Il est possible que certains opérateurs, conscients de cette difficulté de recherche, donnent dans des canaux de service, des informations sur le satellite, les canaux diffusés, les fréquences,... C'est ce qu'on appelle la "flavour" (le goût) du satellite. L'organe central peut tenter de lire ce canal de service. Il est possible que la liste et les paramètres correspondant à ces canaux de service soient publics et publiés dans les revues spécialisées, et qu'on puisse donc les pré-introduire dans la table en question. Dans tous les cas, on pourra faire appel à une procédure d'apprentissage "learn satellite", qui vise à faire l'inventaire systématique des programmes diffusés par le satellite en question, et à stocker dans la table les paramètres relevés sur chaque programme.

Par ailleurs, le microprocesseur 31 gère un historique de la réception, mémorisé dans une troisième mémoire 39. Lorsqu'il détecte un incident en analysant les données 33 il peut :
- gérer lui-même l'incident, en produisant les commandes nécessaires 35 ;
- informer l'organe central 21, par exemple en positionnant un drapeau 34 qui sera interprété comme une interruption masquable ;
- informer un centre de production ou de distribution, pour une information redirigée 36.

La figure 4 illustre de façon schématique les grandes tâches effectuées par le microprocesseur 31, qui peuvent se décomposer en quatre grands groupes :
- supervision 41 : - surveillance de la transmission, mémorisation des incidents de transmission, autotest, diagnostic de pannes, déroulement d'un télédiagnostic, positionnement d'un drapeau lorsqu'un incident majeur survient, gestion et minimisation d'un incident mineur de transmission, mémorisation des incidents majeurs et mineurs, mémorisation des information d'états au cours du temps, relecture par un autre organe de gestion des différentes informations d'états pour redirection vers un modem téléphonique par exemple,...
- acquisition 42 : - recherche systématique des porteuses, identification des porteuses, identification des débits binaires transmis, détermination des paramètres qui définissent la transmission et mémorisation de ces paramètres, resynchronisation rapide après un incident mineur, resynchronisation après un incident majeur, minimisation de l'incident, optimisation des paramètres d'acquisition en fonction de l'histoire récente de la transmission, acquisition rapide d'un canal dont les paramètres sont connus, mémorisation du taux d'erreur binaire et octets dans le temps,...
- poursuite 43 : - optimisation des paramètres du front-end en fonction des caractéristiques courantes de l'histoire de la transmission, minimisation des incidents, analyse des dérives et correction, apprentissage du canal, apprentissage de l'évolution du canal,...
- service 44 : - présentation d'informations générales à la demande e l'organe de gestion maître telles que "type de front-end", fabricant, indice de révision du logiciel, date de programmation du "firmware", informations réservées au fabricant telles que mo d'encryptage et/ou position d'un identifiant spécifique contre le piratage et/ou numéro de série et/ou autorisation d'utilisation,...

Le microcontrôleur 31 est capable de positionner un drapeau que l'organe de gestion maître pourra interpréter comme une demande d'interruption, suite à un événement important dans le front-end. Le microcontrolleur sera lui-même interrompu chaque fois que l'organe de gestion en fera la demande, mais cette demande ne sera servie que lorsque cela sera autorisé (interruption masquable). Une interruption non-masquable est possible, mais dans des cas très spécifiques. Les informations sont présentées en octets écrits de façon séquentielle sur un bus, ou en RS232C ou tout autre mode

La supervision 41 consiste notamment en une surveillance 411 de la transmission, qui permet d'effectuer un suivi et un diagnostic 412 en cas d'incidents. Un historique de la transmission et desincidents est stocké en mémoire 413. Si nécessaire une signalisation 414 adéquate est générée.

L'acquisition 42 consiste en particulier en une recherche 421 des porteuses, des débits,... afin de permettre la détermination 422 de paramètres qui sont stockés en mémoire 423. ces différentes données permettent l'optimisation de la réception 424, et la resynchronisation en cas d'incidents.

La poursuite 43 a également notamment pour but d'optimiser la réception par apprentissage 431, à l'aide d'un historique 432.

Enfin, le service 44 consiste essentiellement à fournir, à la demande, des informations générales.

Les informations échangées entre le module 225 et l'organe central 21 peuvent notamment comprendre les instructions suivantes :
- acquire F1, F2 : va chercher à s'accrocher à une porteuse d'un satellite préalablement spécifié entre deux fréquences F1 et F2 ;
- track F1, F2 : place le module INFER en mode poursuite entre F1 et F2 ;
- search F1, F2,...: recherche systématique des programmes diffusés sur F1, F2... Et mise à jour de la table ;
- quick search F1, F2 : voir plus haut ;
- optimize : contraint le module INFER à optimiser tous les paramètres de la réception, tel un vernier sur un appareil de mesure. Mise en mémoire de ces paramètres ;
- status : renvoie toutes les informations d'état du module INFER ;
- history : renvoie l'historique des incidents qui se sont produits dans la transmission ou qui ont été interprétés comme tels par INFER. L'exploitation est la maintenance ;
- survey : demande à INFER de sauvegarder les incidents, pour exploitation par "history" ;
- bit error rate : renvoie le taux d'erreur binaire courant, sa valeur moyenne depuis la dernière lecture... ;
- byte error rate : renvoie le taux d'erreur octet courant, sa valeur moyenne depuis la dernière lecture... ;
- major incident : renvoie des infos sur les incidents majeurs qui se sont produits ;
- minor incident : renvoie des infos sur les incidents mineurs qui se sont produits ;
- autotest : lance l'exécution d'un test automatique, qui va vérifier l'état du module INFER. Cette instruction peut être lancée à distance, dans le cas de télémaintenance de têtes de réseaux, par exemple. En cas de problème détecté, l'organe central renvoie les informations sur les éléments défectueux ;
- identify F1, F2,...: permet d'identifier les programmes diffusés sur F1, F2,... et d'en stocker les paramètres dans la table ;
- jump F1 : permet de sauter de la fréquence courante (le programme regardé) au programme diffusé sur F1, en minimisant les effets du saut sur les informations reçues : images, son, données... ;
- masquable interrupt 1, 2, 3,...: permet d'autoriser l'organe central à interrompre le microprocesseur hôte selon les niveaux 1, 2, 3... ;
- non masquable interrupt : n'autorise pas l'organe central à interrompre le microprocesseur hôte ;
- request : le host interrompt l'organe central pour une tâche à accomplir connue par INFERLAN;
- execute B1, B2, ... : permet au microprocesseur host d'appliquer des instructions en assembleur qui ne sont pas dans INFERLAN, et de les voir être exécutées par l'organe central ;
- end of execute : retour au mode interprété INFERLAN ;
- goto "channel 5" permet de sauter au programme courant "channel 5", dont les paramères sont tablés auparavant ;
- monitor "channel 5" : à définir. C'est une provision ;
- monitor F1 : à définir. C'est une provision ;
- auto : c'est un mode qui place le module INFER dans un état où il réagit seul aux évolutions de la transmission, aux incidents,... ceci de manière automatique ;
- set T1, M1 : permet au microprocesseur host de placer la valeur M1 dans le registre T1 du module INFER, grâce aux adresses (I2C par exemple, mais pas exclusivement) des différents éléments constitutifs du module INFER ;
- find "channel 5" : les paramètres qui définissent "channel 5" sont inconnus. Le système va donc effectuer une recherche systématique, jusqu'à trouver le programme "channel 5 ;
- configure "channel 5" : place dans la table les paramètres qui définissent "channel 5" ;
- restore "channel 5" : après un incident, ou en cours de zapping, permet de retrouver très rapidement les paramètres qui définissent "channel 5" ;
- transparent : place l'organe central en mode transparent, c'est-à-dire qu'il recopie vers l'intérieur de INFER tout ce qui lui est présenté sur ses accès;
- learn satellite : va faire l'inventaire de tout ce qui est émis par le satellite, et tabler les paramètres correspondants ;
- flavour satellite : vise à reconnaître si le satellite écouté est celui qu'on cherche ;
- flavour carrier : vise à reconnaître si la porteuse écoutée, le multiplex écouté est bien celui qu'on cherche.

Avantageusement, l'ensemble 21 respecte les règles suivantes :
- interface vers l'extérieur par un bus parallèle ;
- accès direct possible à un bus I2C ;
- mode transparent du microcontrôleur, qui recopie vers le bus I2C interne à la carte tout cequi lui arrive sur le bus parallèle externe, en écriture et lecture.
- présence d'un "chip select" et d'un "write", qui permettent de s'interfacer avec les bus parallèles des microprocesseurs courants.

## Revendications

1. Procédé de contrôle et de gestion de la réception de signaux numériques susceptibles d'être transmis selon plusieurs modes de transmission, correspondant chacun à un canal de transmission distinct,
caractérisé en ce qu'on associe à chacun desdits modes de transmission un module (225) de contrôle spécifique capable de :
- recevoir des commandes génériques (28 ; 32) indépendantes desdits modes de transmission ; et
- générer des commandes spécifiques (35) au mode de transmission concerné, à destination de moyens spécifiques de réception comprenant notamment un syntoniseur (221), un démodulateur numérique (222) et un décodeur de canal (224), en fonction desdites commandes génériques (28 ; 32).

2. Procédé selon la revendication 1, caractérisé en ce que ledit module (225) de contrôle spécifique reçoit et/ou relève des informations spécifiques (33) auxdits moyens de réception, et délivre des informations (34) génériques correspondantes.

3. Procédé selon la revendication 2, caractérisé en ce que ledit module (225) de contrôle spécifique positionne, dans des situations prédéfinies, des indicateurs destinés à un organe central de gestion (21).

4. Procédé selon la revendication 3, caractérisé en ce que lesdits indicateurs sont interprétés par ledit organe central de gestion (21) comme des interruptions.

5. Procédé selon l'une quelconque des revendications 1 à 4, caractérisé en ce que ledit module (225) de contrôle spécifique mémorise :
- des données (37) de transcription et d'interprétation desdites commandes génériques et/ou desdites informations génériques ;
- des données (38) de réglage desdits moyens spécifiques de réception, en fonction de paramètres génériques ;
- des données (39) sur le déroulement de la réception et les éventuels incidents.

6. Procédé selon l'une quelconque des revendications 1 à 5, caractérisé en ce qu'il assure au moins une des fonctions appartenant au groupe comprenant :
- supervision (41) de la réception, avec notamment détection et mémorisation des incidents et diagnostic ;
- acquisition (42) des données, avec notamment recherche et identification des porteuses, détermination et mémorisation des paramètres de transmission, resynchronisation, optimisation des paramètres de transmission ;
- poursuite (43), avec notamment optimisation des paramètres en fonction d'un historique, minimisation des incidents, apprentissage du canal de transmission ; et
- service (44) avec notamment présentation d'informations générales.

7. Procédé selon l'une quelconque des revendications 1 à 6, caractérisé en ce que lesdites commandes génériques et/ou lesdites informations génériques sont présentées sous la forme d'octets délivrés de façon séquentielle.

8. Procédé selon l'une quelconque des revendications 1 à 7, caractérisé en ce que lesdites commandes spécifiques s'appliquent également à des moyens (25) de démultiplexage et/ou à des moyens (223) de synchronisation.

9. Module de contrôle et de gestion de la réception de signaux numériques destinés à être reçus selon un mode de transmission donné, choisi parmi une pluralité de modes de transmission, caractérisé en ce qu'il comprend :
- des moyens pour recevoir des commandes génériques délivrées par un organe central de gestion ;
- des premiers moyens de mémorisation, non accessibles, comprenant des données d'interprétation;
- des moyens d'interprétation desdites commandes génériques, en fonction desdites données d'interprétation et de paramètres de commande délivrant des commandes spécifiques audit mode de transmission donné, à destination de moyens spécifiques de réception comprenant notamment un syntoniseur, un démodulateur numérique et un décodeur de canal,
- des seconds moyens de mémorisation desdits paramètres de commandes, lesdits paramètres de commande étant déterminés par ledit module et/ou reçus de l'extérieur.

10. Module selon la revendication 9, caractérisé en ce qu'il comprend des troisièmes moyens de mémorisation de données représentatives du déroulent de la réception, et des moyens d'optimisation des paramètres de réception en fonction desdites données représentatives du déroulement de la réception.
